# EUROPÄISCHE PATENTSCHRIFT

(11) **EP 1 941 754 B1**
(45) Veröffentlichungstag und Bekanntmachung des Hinweises auf die Patenterteilung: **26.01.2011**
(21) Anmeldenummer: 06807416.0
(22) Anmeldetag: 19.10.2006
(51) Int. Cl.: H04W 52/02

(54) **VERFAHREN ZUR STEUERUNG VON BASISSTATIONEN IN DRAHTLOSEN KOMMUNIKATIONSNETZEN**
METHOD FOR CONTROLLING BASE STATIONS IN WIRELESS COMMUNICATION NETWORKS
PROCEDE DE COMMANDE DE STATIONS DE BASE DANS DES RESEAUX DE COMMUNICATION SANS-FIL

(30) Priorität: 26.10.2005 DE 102005051291
(43) Veröffentlichungstag der Anmeldung: 09.07.2008
(73) Patentinhaber: Siemens Enterprise Communications GmbH & Co. KG, 81379 München (DE)
(72) Erfinder: KLEINDL, Günter, A-3370 Ybbs/Donau (AT)
(74) Vertreter: Fritzsche, Thomas
(86) Internationale Anmeldenummer: PCT/EP2006/067592
(87) Internationale Veröffentlichungsnummer: WO 2007/048750

(56) Entgegenhaltungen:
- WO-A-02/07464
- WO-A2-01/92992
- WO-A2-98/26614
- WO-A2-98/57516

## Beschreibung

Drahtlose Kommunikationsnetze wie beispielsweise WLAN (Wireless Lokal Area Networks) oder Mobilfunknetze werden durch Basisstationen gebildet, wobei die Basisstationen jeweils eine Funksendeeinheit aufweisen, die jeweils einen Funkbereich realisieren. Die Funkbereiche bzw. Funkzellen der Basisstationen sind in dem Bereich des jeweiligen Kommunikationsnetzes überwiegend überlappend ausgebildet, um eine lückenlosen Gesamtfunkbereich für das drahtlose Kommunikationsnetz zu gewährleisten.

Mobile Endgeräte von drahtlosen Kommunikationsnetzen sind bei stationärem Betrieb in einem Funkbereich registriert und eine Verbindung bzw. eine Kommunikationsbeziehung von einem mobilen Endgerät zu einem weiteren mobilen oder auch drahtgebundenen Endgerät wird über die Basisstation durchgeführt, in dem das mobile Endgerät aktuell registriert ist. Wird das mobile Endgerät von einem Funkbereich bzw. einer Basisstation in einen weiteren angrenzenden Funkbereich bzw. zur den weiteren Funkbereich realisierenden Basisstation bewegt, wird am Rande des Funkbereichs, in dem das mobile Endgerät registriert ist, das mobile Endgerät von der einen an die andere Basisstation umgesteuert. Hierzu werden im mobilen Endgerät die Pegel der empfangenen Funksignale der benachbarten Funkbereiche gemessen und sofern der Pegel des Funksignals des weiteren Funkbereichs den Pegel des Funksignals des aktuellen Funkbereichs übersteigt, erfolgt eine Umsteuerung des Endgeräts von der aktuellen zu der weiteren Basisstation - in der Fachwelt auch als Handover bezeichnet. Diese Handover- Prozedur ist in den drahtlosen Kommunikationsnetzen GSM- oder WLAN- oder DECT- Netzen standardisiert, wobei durch die Handover- Prozedur auch die Kommunikationsbeziehung des jeweiligen mobilen Endgeräts von einer aktuellen zu einer weiteren Basisstation präzise umgesteuert wird.

Um ein derartiges Handover des Endgeräts zu erreichen, müssen die Basisstationen bzw. die Funkstationen der Funkbereiche zumindest periodisch ein Funksignal aussenden, damit durch das mobile Endgerät der jeweilige Funkbereich erkannt bzw. der Pegel des empfangenen Funksignals gemessen werden kann. Dieses periodische Aussenden des Funksignals durch eine Basisstation muss auch dann erfolgen, wenn über die jeweilige Basisstation keine Verbindung vermittelt bzw. geführt wird oder kein mobiles Endgerät in dem Funkbereich der jeweiligen Basisstation aktiviert ist.

Das Dokument WO 98/26614 A2 beschreibt eine Basisstation für ein Funk-Kommunikationssystem und ein Verfahren zum Steuern derselben. Funkeinrichtungen der Basisstation können in einen Energiesparmodus geschaltet werden, sobald sie keine Kommunikationsverbindungen versorgen.

Auch aus dem Dokument WO 02/007464 ist eine Basisstation für ein Mobilfunksystem bekannt. Teile der Basisstation können bei einem niedrigen Funkverkehrsaufkommen in einen energiesparenden Modus versetzt werden.

Aufgabenstellung

Der Erfindung liegt die Aufgabe zugrunde, die Steuerung der Basisstationen in drahtlosen Kommunikationsnetzen effizienter zu gestalten. Die Aufgabe wird durch die Merkmale von Anspruch 1 und 10 gelöst.

Der wesentliche Aspekt der Erfindung ist darin zu sehen, dass eine Basisstation inaktiv gesteuert wird, sofern kein Funksignal von einem der mobilen Endgeräte empfangen wird, wobei Funksignale von mobilen Endgeräten weiter empfangen werden können. Empfängt eine inaktiv gesteuerte Basisstation ein Funksignal zumindest eines mobilen Endgeräts, wird diese aktiv gesteuert.

Ein wesentlicher Vorteil der Erfindung ist darin zu sehen, dass die Anzahl der Basisstationen, die Funksignale aussenden, auf ein Minimum reduziert wird, da bei inaktiven Basisstationen der Funkbereich deaktiviert ist, d.h. es wird kein Funksignal ausgesandt, wobei Funksignale von Endgeräten empfangen werden können. Hierdurch können Basisstationen effizienter und wirtschaftlicher eingesetzt werden. Ein weiterer Vorteil besteht darin, dass die Belastung der Umwelt durch Funksignale reduziert wird.

Weitere vorteilhafte Weiterbildungen der Erfindung insbesondere eine erfindungsgemäss ausgestaltete Basisstation sind den weiteren Ansprüchen zu entnehmen.

Im Folgenden wird die Erfindung anhand zweier Zeichnungen näher erläutert. Dabei zeigen
- Figur 1: ein drahtloses Kommunikationsnetz mit zwei die Er- findung realisierenden Funkbereichen und
- Figur 2: ein auf das in Figur 1 dargestellte drahtlose Kom- munikationsnetz bezogene Ablaufdiagramm zu Erläute- rung der Erfindung.

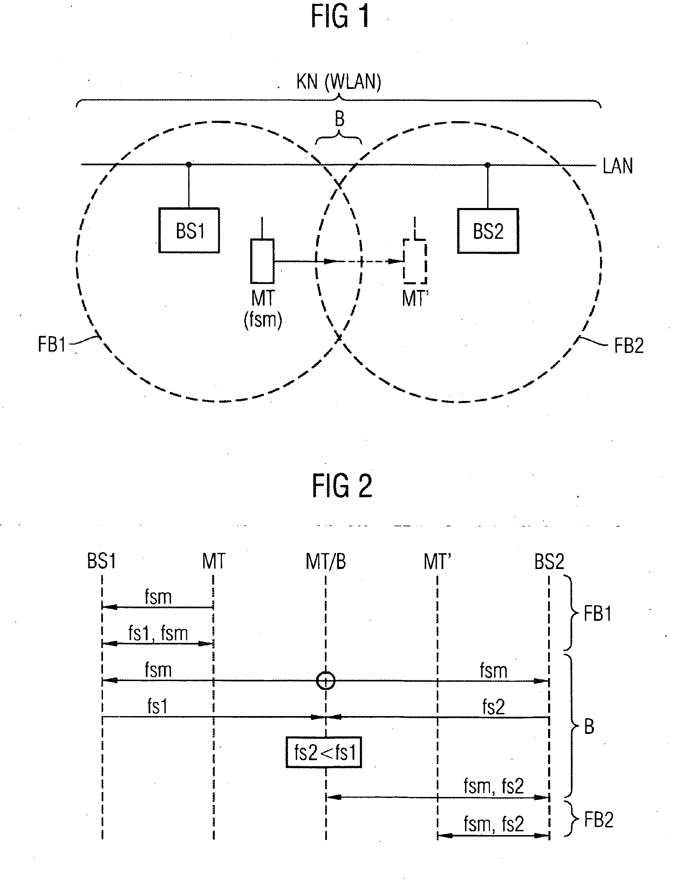

In Figur 1 ist ein drahtloses Kommunikationsnetz KN dargestellt, das üblicherweise mehrere Funkbereiche FB aufweist. Für die Erläuterung der Erfindung ist das drahtlose Kommunikationsnetz KN beispielhaft durch zwei Funkbereiche bzw. Funkzellen FB1,FB2 gebildet. Des weiteren sei für das Ausführungsbeispiel angenommen, dass das drahtlose Kommunikationsnetz KN durch ein WLAN (Wireless Local Area Networks) realisiert ist - in der Figur 1 durch die Bezeichnung KN(WLAN) angedeutet. Die Basisstationen BS1,BS2 sind untereinander über ein lokales Netz LAN verbunden, das zu weiteren nicht dargestellten Basisstationen und zu anderen Netzkomponenten wie Zugangseinrichtungen zu weiteren drahtlosen oder drahtgebundenen Kommunikationsnetzen geführt ist. Die Erfindung kann alternativ in unterschiedlichen drahtlosen Kommunikationsnetzen KN wie beispielsweise DECT- oder GSM- oder GRPS- Netzen vorgesehen werden.

Der erste und zweite Funkbereich FB1,FB2 ist durch eine erste und zweite Basisstation BS1,BS2 realisiert. Hierzu weisen die Basisstationen BS1,BS2 jeweils Funksendeeinheiten - nicht dargestellt - auf, die ein erstes und zweites Funksignal fs1,fs2 in einem als Funkbereich FB definierten Bereich aussenden - in der Figur 1 durch gestrichelte Kreise angedeutet ist. Der Funkbereich FB ist beispielsweise dadurch definiert, dass in diesem Bereich der Pegel des Funksignals fs1,fs1 ausreicht, um in mobilen Endgeräten MT, die sich in diesem Bereich befinden, noch empfangen werden zu können. Um ein lückenloses drahtloses Kommunikationsnetz KN zu bilden, überlappen die benachbarten Funkbereiche FB, d.h. auch die beiden dargestellten Funkbereiche FB1,FB2 überlappen im Bereich B. In diesem Bereich B können von einem mobilen Endgerät MT die Funksignale fs1,fs2 von beiden Basisstationen BS1,BS2 empfangen werden.

Erfindungsgemäß werden die beiden Basisstationen BS1,BS2 inaktiv gesteuert, wenn von keinem mobilen Endgerät MT ein Funksignal fsm empfangen wird - in Figur 1 durch die Bezeichnung MT(fsm) angedeutet. Dies bedeutet, dass die Funksendeeinheiten der beiden Basisstationen BS1,BS2 soweit deaktiviert werden, dass kein Funksignal fs1,fs2 mehr ausgesandt wird. Die Empfangseinheiten der beiden Basisstationen BS1,BS2 bleiben jedoch aktiv, d.h. Funksignale fsm von mobilen Endgeräten MT können empfangen werden und weitere Aktionen einleiten.

Für das Ausführungsbeispiel sei zunächst angenommen, dass in keinem der beiden Basisstationen BS1,BS2 ein Funksignal fsm eines mobilen Endgeräts MT empfangen wird. Dies bedeutet erfindungsgemäß, dass von keinem der beiden Basisstationen BS1,BS2 ein Funksignal fs1,fs2 ausgesandt wird.

Für das Ausführungsbeispiel sei weiterhin angenommen, dass sich ein mobiles Endgerät MT bzw. Mobilteil zuerst im ersten Funkbereich FB1 befindet und aktiviert wird. Die Aktivierung wird beispielsweise dadurch bewirk, dass das mobile Endgerät MT mit Energie versorgt wird, wodurch eine Sendeeinheit - nicht dargestellt - des mobilen Endgeräts MT periodisch ein seine Identität anzeigendes Funksignal fsm aussendet und eine Empfangseinheit - nicht dargestellt - des mobilen Endgeräts MT empfangsbereit gesteuert wird. Dieser und weitere erfindungsgemäße Schritte sind im Ablaufdiagramm in Figur 2 dargestellt. In der ersten Basisstation BS1 wird das ausgesandte Funksignal fsm des aktivierten mobilen Endgeräts MT empfangen und daraufhin wird die Funksendeeinheit der ersten Basisstation BS1 aktiviert, d.h. es wird ein die erste Basisstation BS1 identifizierendes erstes Funksignale fs1 periodisch ausgesandt.

Das ausgesandte erste Funksignal fs1 wird in dem mobilen Endgerät MT empfangen und daraufhin ein nicht dargestellter Registriervorgang eingeleitet, bei dem das mobile Endgerät MT sowohl in der ersten Basisstation BS1 als auch im drahtlosen Kommunikationsnetz KN authentifiziert und registriert wird. Anschließend können von diesem oder zu diesem mobilen Endgerät MT Kommunikationsbeziehungen aufgebaut werden - nicht dargestellt.

Für das Ausführungsbeispiel sei als nächster Schritt angenommen, dass das mobile Endgerät MT von dem ersten Funkbereich FB1 über den Bereich B in den zweiten Funkbereich FB2 bewegt wird - in der Figur 1 durch einen Pfeil und ein gestricheltes mobiles Endgerät MT' angedeutet. Befindet sich das mobile Endgerät MT in dem Bereich B, in dem die beiden Funkbereiche FB1,FB2 überlappen, so wird das von dem mobilen Endgerät MT ausgesandte Funksignals fsm auch in der inaktiv gesteuerten zweiten Basisstation BS2 mit ausreichendem Pegel empfangen.

Erfindungsgemäß wird durch den Empfang eines Funksignals fsm eines drahtlosen Eingeräts MT in der zweiten Basisstation BS2 - deren Funksendeeinheit aktiviert, d.h. es wird von der zweiten Basisstation BS2 ein seine Identität anzeigendes zweites Funksignal fs2 ausgesandt. In dem mobilen Endgerät MT wird nun sowohl das Funksignal fs1 der ersten Basisstation BS1 als auch das Funksignal fs2 der zweiten Basisstation BS2 empfangen - in Figur 2 durch zwei mit fs1,fs2 bezeichnete Pfeile angedeutet. Solange der Pegel des empfangenen ersten Funksignals fs1 höher ist als Pegel des zweiten Funksignals fs2, solange bleibt das mobile Endgerät MT über die erste Basisstation BS1 im drahtlosen Kommunikationsnetz KN registriert bzw. solange wird eine bestehende Kommunikationsbeziehung bzw. eine Verbindung über die erste Basisstation BS1 geführt.

Bewegt sich das mobile Endgerät MT in dem Bereich B weiter in den zweiten Funkbereich FB2 hinein, wird der Pegel des zweiten Funksignals fs2 den Pegel des ersten Funksignals fs1 übersteigen - in Figur 2 durch ein mit fs2<fs1 bezeichnetes Rechteck angedeutet. Wird ein gesichertes Übersteigen des Pegels des zweiten Funksignals fs2 im mobilen Endgerät MT festgestellt, wird ein Registriervorgang über die zweite Basis-station BS2 mit dem drahtlosen Kommunikationsnetz KN durchgeführt, wonach das mobile Endgerät MT über die zweite Basisstation registriert ist und die Registrierung über die erste Basisstation BS1 aufgehoben wird. Dieser Vorgang wird auch mit Handover bezeichnet, wobei eine bestehende Kommunikationsbeziehung des mobilen Endgeräts MT zu einem anderen nicht dargestellten Endgerät von der ersten Basisstation BS1 über die zweite Basisstation BS2 umgesteuert bzw. vermittelt wird.

Erfindungsgemäß wird die erste Basisstation BS1 inaktiv gesteuert, sofern kein Funksignal fsm von dem mobilen Endgerät MT mehr empfangen wird. Ein Funksignal fsm wird in der ersten Basisstation BS1 als nicht mehr als empfangen bewertet, sofern ein vorgegebener Pegel des empfangenen Funksignals fsm des mobilen Endgeräts unterschritten wird. Dies bedeutet, dass bei Bewegen des mobilen Endgeräts MT aus dem ersten Funkbereich FB1 die erste Basisstation BS1 inaktiv gesteuert wird, wobei angenommen ist, dass kein weiteres mobiles Endgerät im ersten Funkbereich FB1 ein Funksignal aussendet. Bei einer Deaktivierung der ersten Basisstation BS1 wird die Sendeeinheit der ersten Basisstation BS1 soweit deaktiviert, dass kein erstes Funksignal fs1 ausgesandt wird. Die deaktivierte bzw. inaktiv gesteuerte erste Basisstation BS1 kann jedoch weiterhin Funksignale fsm von Endgeräten empfangen, d.h. die Empfangseinheit der ersten Basisstation BS1 bleibt weiterhin aktiv.

Nachdem das mobile Endgerät MT' in den zweiten Funkbereich FB2 eingetreten ist, wird das zweite Funksignal fs2 der zweiten Basisstation BS2 in mobilen Endgerät MT' und das Funksignal fsm des mobilen Endgeräts MT' in der zweiten Basisstation BS2 empfangen und entsprechend weiterverarbeitet bzw. weitergeleitet.

Wird das sich im zweiten Funkbereich FB2 befindliche mobile Endgerät MT' deaktiviert, d.h. wird beispielsweise die Energievorsorgung abgeschaltet, so wird von dem mobilen Endgerät MT' kein Funksignal fsm mehr ausgesandt. Wird erfindungsgemäß in der zweiten Basisstation BS2 kein Funksignal fsm des mobilen Endgeräts MT' und auch kein Funksignal von einem weiteren im zweiten Funkbereich FB2 befindlichen Endgerät empfangen, so wird die zweite Basisstation BS2 inaktiv gesteuert. Dies bedeutet, das die Empfangseinheit der zweiten Basisstation BS2 soweit deaktiviert wird, dass von dieser kein zweites Funksignal fs2 mehr aussendet wird.

Bei mehreren überlappenden Funkbereichen - nicht dargestellt - werden in den Überlappungsbereichen jeweils die gleichen Schritte wie vorhergehend beschrieben durchgeführt, d.h. in Abhängigkeit von der Pegelhöhe der empfangenen Funksignale der Basisstationen wird eine Registrierung über die betroffene Basisstation durchgeführt und eine eventuell bestehende Kommunikationsbeziehung wird umgesteuert bzw. über die Basisstation vermittelt, über die das mobile Endgerät im drahtlosen Kommunikationsnetz registriert ist. Erfindungsgemäß werden hierbei diejenigen Basisstationen inaktiv gesteuert, bei denen kein Funksignal eines in seinem Funkbereich befindlichen mobilen Endgeräts mehr empfangen wird. Die Inaktivsteuerung bedeutet zumindest eine Deaktivierung der Funksendeeinheit der betroffenen Basisstationen, d.h. es wird kein Funksignal ausgesandt.

Erfindungsgemäß kann von einem mobilen Endgerät MT im Sinne eines aktiv Steuerns einer Basisstation BS1,BS2 und eines anschließenden Empfangs eines die Basisstation BS1,BS2 identifizierenden Funksignals fs1,fs2 temporär oder zeitweise ein Funksignal fsm ausgesandt werden. Dies ist insbesondere dann vorteilhaft, wenn ein Ortswechsel des Endgeräts MT festgestellt wird - beispielsweise durch ein im Endgerät MT integriertes GPS-System - oder wenn das mobile Endgerät MT über einen Zeitraum - insbesondere einen längeren Zeitraum - kein Funksignal (fsm) mehr ausgesandte. Hierdurch kann dem Endgerät MT der aktuelle Funkbereich FB1,FB2 bzw. die aktuelle Basisstation BS1,BS2 oder auch bei Paging- Betrieb der aktuelle Rufbereich mitgeteilt werden und ein ankommender Ruf kann an den jeweiligen Funk- oder Rufbereich weitergeleitet werden.

Die Erfindung ist nicht auf das Ausführungsbeispiel beschränkt, sondern kann in allen drahtlosen Kommunikationsnetzen eingesetzt werden, bei denen Funkbereiche bzw. Funkzellen mit Basisstationen gebildet werden, wobei die erfindungsgemäßen Schritte jeweils in Protokolle bzw. Funksignale der jeweiligen drahtlosen Kommunikationsnetze KN mit geringem zusätzlichen Aufwand einbezogen werden können. Durch die Erfindung kann sowohl der Energieverbrauch der Basisstationen als auch die durch die Basisstationen verursachte Belastung der Umwelt durch Funksignale reduziert werden.

## Patentansprüche

1. Verfahren zum Steuern von Funkbereiche (FB1, FB2) realisierenden Basisstationen (BS1, BS2) in drahtlosen Kommunikationsnetzen mit mobilen Endgeräten (MT),
- bei dem eine Basisstation (BS1, BS2) inaktiv gesteuert wird, sofern kein Funksignal (fsm) von einem der mobilen Endgeräte (MT) empfangen wird, wobei kein Funksignal (fs1, fs2) von der Basisstation (BS1. BS2) ausgesandt wird und wobei Funksignale (fsm) von mobilen Endgeräten (MT) weiter empfangen werden können;
**dadurch gekennzeichnet, dass** eine inaktiv gesteuerte Basisstation (BS1, BS2) bei einem Empfang eines Funksignals (fsm) zumindest eines mobilen Endgeräts (MT) durch die inaktiv gesteuerte Basisstation (BS1, BS2) aktiv gesteuert wird.

2. Verfahren nach Anspruch 1, **dadurch gekennzeichnet,**
**dass** bei einer inaktiv gesteuerten Basisstation (BS1,BS2) dessen Funkbereich (FB1,FB2) deaktiviert ist, wobei Funksignale (fsm) von mobilen Endgeräten (MT) empfangen werden können.

3. Verfahren nach einem der Ansprüche 1 und 2, **dadurch gekennzeichnet,**
**dass** von einem mobilen Endgerät (MT) ein Funksignal (fsm) im Rahmen einer bestehenden oder einer einzuleitenden Kommunikationsbeziehung oder bei aktiviertem Endgerät (MT) ausgesandt wird.

4. Verfahren nach einem der vorhergehenden Ansprüche, **dadurch gekennzeichnet,**
**dass** ein Funksignal (fsm) eines mobilen Endgeräts (MT) bei einem Wechsel von einem Funkbereich (FB1,FB2) einer Basisstation (BS1,BS2) in einen Funkbereich (FB1,FB2) einer weiteren Basisstation (BS1,BS2) von der weiteren Basisstation (BS1,BS2) empfangen wird und die weitere Basisstation (BS1,BS2), sofern noch nicht aktiv, aktiv gesteuert wird.

5. Verfahren nach einem der vorhergehenden Ansprüche, **dadurch gekennzeichnet,**
**dass** eine aktiv gesteuerte Basisstation (BS1,BS2) periodisch ein die Basisstation (BS1,BS2) identifizierende Funksignal (fs1,fs2) im realisierten Funkbereich (FB1,FB2) aussendet, und
**dass** von einem aktiven mobilen Endgerät (MT) periodisch ein das mobile Endgerät (MT) identifizierendes Funksignal (fs1,fs2) ausgesandt wird.

6. Verfahren nach einem der Ansprüche 1 bis 4, **dadurch gekennzeichnet,**
**dass** von einem mobilen Endgerät (MT) im Sinne eines aktiv Steuerns einer Basisstation (BS1,BS2) und eines anschließenden Empfangs eines die Basisstation (BS1,BS2) identifizierenden Funksignals (fs1,fs2) temporär oder zeitweise ein Funksignal (fsm) ausgesandt wird.

7. Verfahren nach einem der Ansprüche 1 bis 4, **dadurch gekennzeichnet,**
**dass** bei einem Feststellen eines Ortswechsels des mobilen Endgeräts von diesem im Sinne eines aktiv Steuerns einer Basisstation (BS1,BS2) und eines anschließenden Empfangs eines die Basisstation (BS1,BS2) identifizierenden Funksignals (fs1,fs2) temporär oder zeitweise ein Funksignal (fsm) ausgesandt wird.

8. Verfahren nach einem der Ansprüche 1 bis 4, **dadurch gekennzeichnet,**
**dass** bei einem Feststellen eines Zeitraums, in dem des mobile Endgerät (MT) kein Funksignal (fsm) ausgesandte, von diesem im Sinne eines aktiv Steuerns einer Basisstation (BS1,BS2) und eines anschließenden Empfangs eines die Basisstation (BS1,BS2) identifizierenden Funksignals (fs1,fs2) temporär oder zeitweise ein Funksignal (fsm) ausgesandt wird

9. Verfahren nach einem der vorhergehenden Ansprüche, **dadurch gekennzeichnet,**
**dass** ein Empfang eines Funksignals (fsm,fs1,fs2) durch die Pegelhöhe eines empfangenen Funksignals (fsm,fs1,fs2) bestimmt ist, und
**dass** bei einem Wechsel eines mobilen Endgeräts (MT) von einem Funkbereich (FB1,FB2) in einen weiteren Funkbereich (FB1,FB2) der Wechsel von einer Basisstation (BS1,BS2) zu der weiteren Basisstation (BS1,BS2) eingeleitet wird, sofern der Pegel des im mobilen Endgerät (MT) empfangenen Funksignals (fs1,fs2) der weiteren Basisstation (BS1,BS2) den Pegel der einen Basisstation (BS1,BS2) übersteigt.

10. Basisstation für ein drahtlos Kommunikationsnetz (KN) mit mobilen Endgeräten (MT),
- mit Mitteln zum inaktiv Steuern der Basisstation (BS1, BS2), sofern kein Funksignal (fsm) von einem der mobilen Endgeräte (MT) empfangen wird, wobei kein Funksignal (fs1, fs2) von der Basisstation (BS1, BS2) ausgesandt wird und wobei Mittel zum Empfang der Funksignale (fsm) von mobilen Endgeräten (MT) aktiv bleiben;
**dadurch gekennzeichnet, dass** die Basisstation ferner Mittel zum aktiv Steuern einer Basisstation (BS1, BS2) bei einem Empfang eines Funksignals (fsm) zumindest eines mobilen Endgeräts (MT) durch die inaktiv gesteuerte Basisstation (BS1, BS2) umfasst.

11. Basisstation nach Anspruch 10, **dadurch gekennzeichnet,**
- **dass** bei inaktiv gesteuerten Basisstationen (BS1,BS2) die den Funkbereich (FB1,FB2) realisierenden Funksendemittel deaktiviert sind, und
- **dass** die Empfangsmittel zum Empfang von Funksignalen (fsm) zumindest eines mobilen Endgeräts (MT) aktiv bleiben.

12. Basisstation nach einem der Ansprüche 10 oder 11, **dadurch gekennzeichnet,**
- **dass** bei einer aktiv gesteuerten Basisstation (BS1,BS2) Mittel zum periodischen Aussenden eines die Basisstation (BS1,BS2) identifizierenden Funksignals (fs1,fs2) im realisierten Funkbereich (FB1,FB2), und
- **dass** bei einem aktiven mobilen Endgerät (MT) Mittel zum periodischen Aussenden eines das mobile Endgerät (MT) identifizierenden Funksignals
vorgesehen sind.

13. Basisstation nach einem der Ansprüche 10 bis 12, **dadurch gekennzeichnet,**
**dass** die mobilen Endgeräte (MT) derart ausgestaltet sind, dass ein Funksignal (fsm) im Rahmen einer bestehenden oder einer einzuleitenden Kommunikationsbeziehung oder bei aktiviertem Endgerät (MT) ausgesandt wird.

## Claims

1. Method for controlling base stations (BS1, BS2) providing coverage areas (FB1, FB2) in wireless communication networks with mobile terminals (MT),
- where a base station (BS1, BS2) is switched to inactive if no radio signal (fsm) is received from one of the mobile terminals (MT), wherein no radio signal (fs1, fs2) is emitted from the base station (BS1, BS2) and wherein radio signals (fsm) can continue to be received from mobile terminals (MT).
**characterized in that** a base station (BS1, BS2) that has been switched to inactive, on receiving a radio signal (fsm) from at least one mobile terminal (MT), is switched to active by the base station (BS1, BS2) that has been switched to inactive.

2. Method according to Claim 1, **characterized in that** where a base station (BS1, BS2) has been switched to inactive and its coverage region (FB1, FB2) deactivated, radio signals (fsm) from mobile terminals (MT) can be received.

3. Method according to one of Claims 1 and 2, **characterized in that** a radio signal (fsm) is emitted by a mobile terminal (MT) within the framework of an existing communication relationship or of one which is to be initiated or where a terminal (MT) has been activated.

4. Method according to one of the preceding claims, **characterized in that** a radio signal (fsm) of a mobile terminal (MT), when changing from one coverage area (FB1, FB2) of one base station (BS1, BS2) to another coverage area (FB1, FB2) of a further base station (BS1, BS2), is received by the further base station (BS1, BS2) and the further base station (BS1, BS2), if not yet active, is switched to active.

5. Method according to one of the preceding claims, **characterized in that** a base station (BS1, BS2) that has been switched to active periodically emits a radio signal (fs1, fs2) identifying the base station (BS1, BS2) in the realized coverage area (FB1, FB2).

6. Method according to one of Claims 1 to 4, **characterized in that** a radio signal (fsm) is emitted temporarily or intermittently by a mobile terminal (MT) in terms of switching a base station (BS1, BS2) to active and subsequently receiving a radio signal (fs1, fs2) identifying the base station (BS1, BS2).

7. Method according to one of Claims 1 to 4, **characterized in that** when a change of location of the mobile terminal is ascertained, a radio signal (fsm) is emitted temporarily or intermittently by said mobile terminal in terms of switching a base station (BS1, BS2) to active and subsequently receiving a radio signal (fs1, fs2) identifying the base station (BS1, BS2).

8. Method according to one of Claims 1 to 4, **characterized in that** when a period in which no signal (fsm) is emitted from the mobile terminal (MT) is ascertained, a radio signal (fsm) is emitted temporarily or intermittently by said mobile terminal in terms of switching a base station (BS1, BS2) to active and subsequently receiving a radio signal (fs1, fs2) identifying the base station (BS1, BS2).

9. Method according to one of the preceding claims, **characterized in that** reception of a radio signal (fsm, fs1, fs2) is determined by the level of a received radio signal (fsm, fs1, fs2), and **in that** when a mobile terminal (MT) changes from one coverage area (FB1, FB2) to a further coverage area (FB1, FB2), the change from one base station (BS1, BS2) to the further base station (BS1, BS2) is initiated if the level of the radio signal (fs1, fs2) of the further base station (BS1, BS2) received in the mobile terminal (MT) exceeds the level of the one base station (BS1, BS2).

10. Base station for a wireless communication network (KN) with mobile terminals (MT),
- having means for switching the base station (BS1, BS2) to inactive if no radio signal (fsm) is received from one of the mobile terminals (MT), wherein no radio signal (fs1, fs2) is emitted by the base station (BS1, BS2) and wherein means for the reception of the radio signals (fsm) from mobile terminals (MT) remain active;
- **characterized in that** the base station also includes means for switching a base station (BS1, BS2) to active when a radio signal (fsm) from at least one mobile terminal (MT) is received by the base station (BS1, BS2) that has been switched to inactive.

11. Base station according to Claim 10, **characterized**
- **in that** where base stations (BS1, BS2) have been switched to inactive, the radio transmitting means realizing the coverage area (FB1, FB2) are deactivated, and
- **in that** the reception means for the reception of radio signals (fsm) from at least one mobile terminal (MT) remain active.

12. Base station according to one of Claims 10 or 11, **characterized**
- **in that** where a base station (BS1, BS2) has been switched to active, means for the periodic emitting of a radio signal (fs1, fs2) identifying the base station (BS1, BS2) are provided in the realized coverage area (FB1, FB2), and
- **in that** where a mobile terminal (MT) is active, means for the periodic emitting of a radio signal identifying the mobile terminal (MT) are provided.

13. Base station according to one of Claims 10 to 11, **characterized in that** the mobile terminals (MT) are developed in such a manner that a radio signal (fsm) is emitted within the framework of an existing communication relationship or of one which is to be initiated or where a terminal has been activated.

## Revendications

1. Procédé de commande de stations de base (BS1, BS2) formant des zones de radiocommunication (FB1, FB2) dans des réseaux de communication sans fil comportant des terminaux mobiles (MT),
- dans lequel une station de base (BS1, BS2) est commandée pour être inactive, dans la mesure où aucun signal radioélectrique (fsm) n'est reçu par un des terminaux mobiles (MT), aucun signal radioélectrique (fs1, fs2) n'étant émis par la station de base (BS1, BS2) et des signaux radioélectriques (fsm) de terminaux mobiles (MT) pouvant continuer d'être reçus ;
**caractérisé en ce qu'**une station de base (BS1, BS2) commandée pour être inactive est commandée pour devenir active en cas de réception d'un signal radioélectrique (fsm) d'au moins un terminal mobile (MT) par la station de base (BS1, BS2) commandée pour être inactive.

2. Procédé selon la revendication 1, **caractérisé en ce qu'**une station de base (BS1, BS2) commandée pour être inactive dont la zone de radiocommunication (FB1, FB2) est désactivée, peut recevoir des signaux radioélectriques (fsm) de terminaux mobiles (MT).

3. Procédé selon l'une des revendications 1 et 2, **caractérisé en ce qu'**un signal radioélectrique (fsm) est émis par un terminal mobile (MT) dans le cadre d'une relation de communication présente ou à établir ou en cas de terminal (MT) activé.

4. Procédé selon l'une quelconque des revendications précédentes, **caractérisé en ce que**,
en cas de passage d'une zone de radiocommunication (FB1, FB2) d'une station de base (BS1, BS2) à une zone de radiocommunication (FB1, FB2) d'une autre station de base (BS1, BS2), un signal radioélectrique (fsm) d'un terminal mobile (MT) est reçu par l'autre station de base (BS1, BS2) et l'autre station de base (BS1,BS2), si elle n'est pas encore active, est commandée pour être active.

5. Procédé selon l'une quelconque des revendications précédentes, **caractérisé** et
en ce qu'une une station de base (BS1, BS2) commandée pour être active émet périodiquement un signal radioélectrique (fs1, fs2) identifiant la station de base (BS1, BS2) dans la zone de radiocommunication (FB1, FB2) réalisée et
en ce qu'un signal radioélectrique (fs1, fs2) identifiant le terminal mobile (MT) est émis périodiquement par un terminal mobile (MT) actif.

6. Procédé selon l'une des revendications 1 à 4, **caractérisé**
**en ce qu'**un signal radioélectrique (fsm) est émis temporairement ou de temps en temps par un terminal mobile (MT) dans le but d'une commande d'activation d'une station de base (BS1, BS2) et dans le but d'une réception subséquente d'un signal radioélectrique (fs1, fs2) identifiant la station de base (BS1, BS2).

7. Procédé selon l'une des revendications 1 à 4, **caractérisé**
**en ce que**, lors d'une détermination d'un changement de lieu du terminal mobile, ce dernier émet temporairement ou de temps en temps un signal radioélectrique (fsm) dans le but d'une commande d'activation d'une station de base (BS1, BS2) et dans le but d'une réception subséquente d'un signal radioélectrique (fs1, fs2) identifiant la station de base (BS1, BS2).

8. Procédé selon l'une des revendications 1 à 4, **caractérisé**
**en ce que**, en cas de détermination d'une période de temps au cours de laquelle le terminal mobile (MT) n'a pas envoyé de signal radioélectrique (fsm), ce dernier émet temporairement ou de temps en temps un signal radioélectrique (fsm) dans le but d'une commande d'activation d'une station de base (BS1, BS2) et dans le but d'une réception subséquente d'un signal radioélectrique (fs1, fs2) identifiant la station de base (BS1, BS2).

9. Procédé selon l'une quelconque des revendications précédentes, **caractérisé**
**en ce qu'**une réception d'un signal radioélectrique (fsm, fs1, fs2) est déterminée par l'amplitude du niveau d'un signal radioélectrique (fsm, fs1, fs2) reçu, et
**en ce que**, en cas de passage d'un terminal mobile (MT) d'une zone de radiocommunication (FB1, FB2) à une autre zone de radiocommunication (FB1, FB2), le passage d'une station de base (BS1, BS2) à l'autre station de base (BS1, BS2) est amorcé si le niveau du signal radioélectrique (fs1, fs2) de l'autre station de base (BS1, BS2) reçu dans le terminal mobile (MT) dépasse le niveau de la station de base (BS1, BS2).

10. Station de base pour un réseau de communication (KN) sans fil ayant des terminaux mobiles (MT),
- dotée de moyens pour commander l'inactivation de la station de base (BS1, BS2) si aucun signal radioélectrique (fsm) d'un des terminaux mobiles (MT) n'est reçu, aucun signal radioélectrique (fs1, fs2) n'étant émis par la station de base (BS1, BS2) et les moyens de réception des signaux radioélectriques (fsm) de terminaux mobiles (MT) restant actifs ;
**caractérisée en ce que** la station de base comporte en outre des moyens pour la commande d'activation d'une station de base (BS1, BS2) lors d'une réception d'un signal radioélectrique (fsm) d'au moins un terminal mobile (MT) par la station de base (BS1, BS2) commandée pour être inactive.

11. Station de base selon la revendication 10, **caractérisée**
- **en ce que**, en cas de stations de base (BS1, BS2) commandées pour être inactives, les moyens d'émission radioélectrique formant la zone de radiocommunication (FB1, FB2) sont désactivés, et
- **en ce que** les moyens de réception destinés à la réception de signaux radioélectriques (fsm) d'au moins un terminal mobile (MT) restent actifs.

12. Station de base selon l'une des revendications 10 ou 11, **caractérisée**
- **en ce que**, en cas d'une station de base (BS1, BS2) commandée pour être active, il est prévu des moyens pour émettre périodiquement un signal radioélectrique (fs1, fs2) identifiant la station de base (BS1,BS2) dans la zone de radiocommunication formée (FB1, FB2), et
- **en ce que**, en cas d'un terminal mobile (MT) actif, il est prévu des moyens pour émettre périodiquement un signal radioélectrique identifiant le terminal mobile (MT).

13. Station de base selon l'une des revendications 10 à 12, **caractérisé**
**en ce que** les terminaux mobiles (MT) sont conçus de manière telle qu'un signal radioélectrique (fsm) soit émis dans le cadre d'une relation de communication présente ou à établir ou en cas de terminal (MT) activé.
